# EUROPÄISCHE PATENTSCHRIFT

(11) **EP 3 639 941 B1**
(45) Veröffentlichungstag und Bekanntmachung des Hinweises auf die Patenterteilung: **18.03.2026**
(21) Anmeldenummer: 18201498.5
(22) Anmeldetag: 19.10.2018
(51) Int. Cl.: B21D 39/04, B25B 27/10

(54) **PRESSMASCHINE MIT SENSORSYSTEM ZUR WERKSTÜCK-IDENTIFIKATION**
PRESSING DEVICE WITH SENSOR SYSTEM FOR IDENTIFICATION OF A WORK PIECE
MACHINE À PRESSER POURVU DE SYSTÈME CAPTEUR DESTINÉ À L'IDENTIFICATION DE PIÈCES À USINER

(43) Veröffentlichungstag der Anmeldung: 22.04.2020
(73) Patentinhaber: Emerson Professional Tools AG, 4450 Sissach (CH)
(72) Erfinder: RUCH, Matthias, 79588 Efringen-Kirchen (DE); KREUZER, Rudolf, 5033 Buchs (CH)
(74) Vertreter: Mader, Joachim

(56) Entgegenhaltungen:
- EP-A1- 2 794 191
- EP-A2- 2 308 648
- EP-B1- 2 794 191
- DE-U1- 202011 004 653
- US-A1- 2015 247 745
- US-A1- 2018 161 969

## Beschreibung

### 1. Technisches Gebiet

Die vorliegende Erfindung betrifft eine Pressmaschine zum plastischen Verformen eines rohrförmigen Werkstücks, insbesondere eines Fittings. Ferner betrifft die Erfindung ein Verfahren zum Betreiben einer solchen Pressmaschine, Pressbacken zum Koppeln an eine Pressmaschine, als auch ein rohrförmiges Werkstück, insbesondere Fitting.

### 2. Technischer Hintergrund

Im Stand der Technik sind mehrere Verfahren zum Verbinden von rohrförmigen Werkstücken bekannt. Gemäß einer dieser Methoden wird ein kleines Rohr über ein größeres Rohr gesteckt, woraufhin dann beide miteinander verpresst werden. In anderen Fällen wird das Verpressen mit Hilfe eines (Press-)Fittings durchgeführt. Dazu können Pressmaschinen, wie beispielsweise Rohrpressmaschinen, verwendet werden, um ein Rohr mit einem Pressfitting zu verbinden. Ein solches Fitting kann zum Beispiel als Rohrleitungsfitting ausgestaltet sein, welches als Verbindungsstück einer Rohrleitung verwendet werden kann. Ein Fitting kann aus verschiedenen Materialien bestehen, beispielsweise aus Kupfer, Kunststoff, Komposit, Edelstahl und/oder ( Stahl.

Eine (Rohr-)Pressmaschine kann Pressbacken aus Metallen hauptsächlich aus Stahl umfassen, die austauschbar sein können. Mittels der Pressbacken kann eine Kraft auf das Fitting ausgeübt werden kann, um ihn derart plastisch zu verformen, sodass das Fitting möglichst schlüssig, dicht und fest an einem Rohr anliegt. Hierfür können die Pressbacken als Schwenkarme ausgestaltet sein, welche mit entsprechenden Pressbacken versehen sein können. Beim Einsatz einer solchen Pressmaschine können die Pressbacken dabei zusammengedrückt werden, um ein dazwischen angeordnetes Fitting über ein Rohr zu verpressen. Die Pressmaschine kann handgeführt sein, und durch einen Motor betrieben werden.

Üblicherweise erfolgt das Verpressen beim Einsatz solch herkömmlicher Pressmaschinen immer mit ihrer maximalen Presskraft, unabhängig von den tatsächlich verwendeten Fittings. Dies kann jedoch nachteilhaft sein, da jede Art von Fitting ihre charakteristische Presscharakteristika aufweist. Ein Fitting aus Stahl sollte demnach anders verpresst werden als beispielsweise ein Fitting aus Kunststoff, auch um einen möglichst optimalen Formschluss und eine lange Haltbarkeit des verpressten Fittings zu garantieren.

Die EP 2 794 191 A1 betrifft ein handgeführtes Pressgerät gemäß dem Oberbegriff des Anspruchs 1 zum Verbinden von zwei Werkstücken. Das Pressgerät weist mindestens ein Datenerfassungselement auf, wobei mindestens ein Datenerfassungselement eine Kamera ist. Weiter wird in einem Verfahren die Kamera als Datenerfassungselement zur Dokumentation von Verpressvorgängen genutzt.

Der vorliegenden Erfindung liegt somit die Aufgabe zu Grunde, ein möglichst optimales und materialschonendes Verpressen eines Fittings mit einem Rohr zu erzielen. Dabei soll insbesondere eine verbesserte (Rohr-)Pressmaschine bereitgestellt werden, welche ein solches Verpressen ermöglicht. Diese und weitere Aufgaben, die für den Fachmann aus der folgenden Beschreibung ersichtlich werden, werden durch eine Pressmaschine gemäß Anspruch 1 und ein Verfahren zum Betreiben einer Pressmaschine gemäß Anspruch 13 gelöst.

### 3. Inhalt der Erfindung

Die vorliegende Erfindung betrifft eine Pressmaschine zum plastischen Verformen eines rohrförmigen Werkstücks. Das rohrförmige Werkstück kann dabei beispielsweise ein Fitting sein, und zum Verbinden zweier Rohre mit diesen verpresst werden. Das rohrförmige Werkstück kann auch ein (oder ein Teil von einem) Kabelschuh (im weiteren ebenfalls Fitting genannt), wie er in der Elektrobranche zum Verbinden von Kabeln oder Litzen eingesetzt wird, sein. Das Fitting kann dabei beispielsweise zumindest teilweise aus Kupfer, Kunststoff, Komposit und/oder (Edel-)Stahl bestehen. Die Pressmaschine wiederum kann eingerichtet sein, um ein solches rohrförmiges Werkstück, wie beispielweise ein Fitting, derart plastisch zu verformen, dass es mit einem im Fitting angeordneten Rohrleitungsstück verbunden wird. Insbesondere kann mittels der Pressmaschine ein (Ver-)Pressen durchgeführt werden, um ein Fitting mit einem Rohr form- und/oder kraftschlüssig unlösbar miteinander zu verbinden. Das Fitting kann beispielsweise gemäß prDIN EN 1254-7 spezifiziert sein.

Die Pressmaschine umfasst dabei Pressbacken. Diese Pressbacken können relativ zueinander beweglich sein, und beispielsweise geschlossen werden und auch auseinandergefahren werden, sodass im auseinandergefahrenen Zustand beispielsweise ein rohrförmiges Werkstück zwischen den Pressbacken angeordnet werden kann. Die Pressbacken können austauschbar sein, und Backen zum Pressen, Crimpen, oder Schneiden aufweisen. Beispielsweise kann die Pressmaschine zwei Pressbacken aufweisen.

Die Pressmaschine umfasst ferner einen Motor, welcher eingerichtet ist zum Antreiben der Pressbacken, um eine Kraft auf das Werkstück aufzubringen. Mittels des Motors können die Pressbacken relativ zueinander bewegt werden, und etwa in den geschlossenen Zustand getrieben werden. Der Motor kann dabei zumindest teilweise die Kraft aufbringen, die notwendig ist, um das rohrförmige Werkstück zu verformen, beispielsweise um ein Fitting mit einem Rohrleitungsstück zu verbinden. Hierzu kann der Motor direkt oder auch über ein Getriebe mit den Pressbacken verbunden sein, um die Motorkraft zu übertragen. Die auf die Pressbacken wirkende Kraft kann dabei variabel eingestellt werden, indem beispielsweise Motorparameter oder andere Parameter (wie etwa Getriebeeinstellungen) entsprechend variiert werden. Auch kann der Motor eine Hydraulik umfassen, um eine Kraft auf das Werkstück aufzubringen. Dabei kann beispielsweise ein Druckbegrenzungsventil geregelt werden.

Ferner umfasst die Pressmaschine ein Sensorsystem, das eingerichtet ist zum Identifizieren des Werkstücks, insbesondere des Fittings. Das Sensorsystem kann dabei eingerichtet sein, um ein individuelles Werkstück zu erkennen, oder auch um ein Werkstück seiner Art nach zu erkennen. Hierzu kann das Sensorsystem Erfassungsmittel (z.B. einen Sensor) als Schnittstelle zum Werkstück umfassen, und entsprechende Auswertemittel, das mittels einem Prozessor und/oder Speicher mit entsprechendem Programmcode ausgestaltet sein kann. Das Erfassungsmittel kann dabei separat zum Auswertemittel an der Pressmaschine bereitgestellt sein. Das Sensorsystem kann dabei über eine an der Pressmaschine angeordnete Energiequelle versorgt werden, welche etwa auch den Motor speisen kann. Das Sensorsystem kann dabei ferner mittels eines Knopfes durch einen Nutzer/Bediener aktiviert werden, um die Identifizierung durchzuführen. Dadurch kann gezielt gesteuert werden, wie bzw. wann die Identifizierung erfolgen soll.

Das Identifizieren bedeutet somit nicht zwingend, dass ein einzelnes Werkstück als individuelles Werkstück identifiziert wird. Es genügt vielmehr, dass es als ein von einem anderen Werkstück verschieden identifiziert oder erkannt wird. So kann im Zuge des Identifizierens das Werkstück beispielsweise anhand seiner Modellnummer klassifiziert werden. In einem Beispiel kann somit erkannt werden, dass ein Fitting aus Edelstahl mit einem Durchmesser von 15 mm vorliegt. Resultierende Daten vom Sensorsystem, etwa Sensordaten, können dabei das identifizierte Werkstück charakterisieren.

Ferner umfasst die Pressmaschine eine Steuerung, die eingerichtet ist, anhand der Sensordaten den Motor zu steuern. Abhängig von dem identifizierten Werkstück wird somit der Motor entsprechend angesteuert. Je nachdem, welche Werkstückart bzw. welcher Typ von Werkstück erkannt wurde, können beispielsweise die Pressbacken unterschiedlich durch den Motor angetrieben werden, um letztlich das Werkstück optimal zu verformen.

Die vorliegende Erfindung erlaubt es somit, das Verformen in Abhängigkeit von dem zu verformenden Gegenstand durchzuführen. Dadurch kann je nach der verwendeten Werkstückart eine individuelle Presskraft mittels des Motors aufgebracht werden, um eine optimale und materialschonende Verformung zu erzielen. Die Verwendung des Sensorsystems erlaubt es dabei, das Werkstück automatisch zu identifizieren und entsprechende Daten an den Motor weiterzugeben, sodass der Nutzer oder Bediener der Pressmaschine selber keine Eingaben tätigen muss und dementsprechend nicht zusätzlich belastet wird.

Vorzugsweise umfasst die Pressmaschine ein Speichermedium mit einer Datenbank. Die Datenbank umfasst dabei vorzugsweise, für eine Mehrzahl von Werkstücken, Steuerparameter zum Steuern der Pressmaschine für jedes der Mehrzahl von Werkstücken. Gemäß der Identifizierung des Werkstücks können somit entsprechende Steuerparameter aus dem Speicher bzw. aus der Datenbank geladen werden, und verwendet werden, um den Motor zu betreiben. Beispielsweise können Steuerparameter für Edelstahlfittings und davon verschiedene Steuerparameter für Kupferfittings in der Datenbank hinterlegt sein. Abhängig davon, ob mittels des Sensorsystems ein Edelstahl- oder Kupferfitting identifiziert wurde, können die entsprechenden Steuerparameter aus der Datenbank geladen werden und von der Steuerung verwendet werden, um die Pressmaschine und letztlich den Motor zu steuern. Dabei können für unterschiedliche Charakteristika der Werkstücke (Material, Größe, Form, etc.) entsprechende Steuerparameter in der Datenbank hinterlegt sein, um ein optimales Verpressen oder Verformen des jeweiligen Werkstücks zu ermöglichen. In einer bevorzugten Ausführungsform kann über eine (kabelgebundene oder kabellose) Schnittstelle auf die Datenbank zugegriffen werden, um beispielsweise den Inhalt der Datenbank zu aktualisieren.

Insbesondere vorzugsweise umfassen die Steuerparameter dabei Pressparameter, welche bevorzugt eine maximale Presskraft, eine Pressgeschwindigkeit, und/oder eine Pressdauer umfassen. Abhängig von der Werkstückart können somit beispielsweise bestimmte Presskräfte, Pressgeschwindigkeiten, Presswegen und/oder Pressdauern vorgegeben werden, welche von der Pressmaschine etwa zum Verpressen oder Verformen des Fittings mit dem Rohrleitungsstück verwendet werden sollen. Der Pressweg kann dabei durch die Stellung des Arbeitskolbens der Pressmaschine beschrieben werden. Der Fachmann versteht dabei, je nach Verwendungszweck der Pressmaschine entsprechende Steuerparameter in der Datenbank zu hinterlegen. Ferner können die Steuerparameter insbesondere Motorparameter umfassen, welche insbesondere eine Motordrehzahl, Motorleistung und/oder einen Öldruck umfassen. Je nach Werkstückart können somit verschiedene Motorparameter in der Datenbank hinterlegt werden, welche basierend auf dem identifizierten Werkstück geladen werden können, um letztlich das Werkstück zu verformen. Der Fachmann versteht, dass die Pressparameter oder Motorparameter auch Getriebeparameter umfassen können, welche die Kraftübertragung vom Motor auf die Pressbacken regeln können. Vorzugsweise können dabei auftretende Parameter mit erwarteten Parametern verglichen werden. Beispielsweise kann eine bei einer eingestellten maximalen Presskraft auftretende Pressgeschwindigkeit ausgewertet werden. Die Ergebnisse können einen Rückschluss auf den Verschleiß und die Lebensdauer der Pressbacken erlauben, sodass Ausfällen vorgebeugt werden kann.

In einer bevorzugten Ausführungsform umfasst das Sensorsystem eine Kamera, einen optischen Scanner, einen RFID-Leser, einen NFC-Leser und/oder ein Bluetooth-Modul. Die Kamera kann eine optische Kamera sein, welche eine hinreichende Auflösung und Qualität haben kann, um das Werkstück zumindest seiner Art nach zu identifizieren. Beispielsweise kann mittels der Kamera ein Fitting mit einem Durchmesser von 15 mm identifiziert werden. Anhand von Farbwerten kann ferner auf das Material des Werkstücks rückgeschlossen werden. Die Kamera kann beispielsweise spezielle Formen von Fittings eindeutig erkennen, und somit die Identifizierung des Werkstücks seiner Art nach erlauben. Mittels des optischen Scanners, des RFID-Lesers, des NFC-Lesers und/oder des Bluetooth-Moduls können Daten oder Kennungen erkannt werden, die beispielsweise von dem Werkstück selbst bereitgestellt werden können, und es erlauben, das Werkstück zu identifizieren. Beispielsweise kann der optische Scanner einen Barcode oder QR-Code erkennen, der auf dem Werkstück angeordnet ist. Zur Gewährleistung der Identifikation mittels optischer Kamera oder optischem Scanner kann an der Pressmaschine auch ein Leuchtmittel bereitgestellt sein, welches den von der Kamera oder von dem Scanner erfassbaren Bereich zumindest teilweise be- oder ausleuchten kann. Das Sensorsystem kann dabei an einer Energieversorgung der Pressmaschine angeschlossen sein, sodass beispielsweise nur eine Energiequelle (z.B. Akku) bereitgestellt sein muss, um Motor und Sensorsystem zu versorgen.

Vorzugsweise ist die Reichweite der Kommunikation des Sensorsystems auf kurze Reichweiten beschränkt. Beispielsweise kann die Kommunikationsreichweite des Sensorsystems zwischen 0 und 5 Meter, vorzugsweise zwischen 0,001 und 4 Meter, weiter vorzugsweise zwischen 0,002 und 3 Meter, weiter vorzugsweise zwischen 0,005 und 2 Meter, weiter vorzugsweise zwischen 0,01 und 1 Meter, weiter vorzugsweise zwischen 0,05 und 0,5 Meter betragen. Das Sensorsystem kann somit nur Werkstücke identifizieren, die sich innerhalb der Kommunikationsreichweite befinden. Dadurch wird ermöglicht, dass nur solche Werkstücke identifiziert werden, welche tatsächlich verformt werden sollen. Eine versehentliche Identifikation von weit entfernten, nicht zu verformenden Werkstücken wird dadurch zumindest teilweise unterbunden. Vorzugsweise ist das Sensorsystem eingerichtet zum Erkennen eines Barcodes auf dem Werkstück, eines QR-Codes auf dem Werkstück, einer Kennung in einem RFID-Transponder an dem Werkstück, einer Kennung in einem NFC-Transponder an dem Werkstück, und/oder einer Kennung in einem Bluetooth-Modul an dem Werkstück. Der Fachmann versteht, dass das Werkstück mit entsprechenden Codes oder Transpondern oder Modulen ausgestattet sein kann, um entsprechende Daten zur Identifikation des Werkstücks - zumindest seiner Art nach - an die Pressmaschine bereitzustellen.

RFID (englisch: radio-frequency-identification) ermöglicht die Identifizierung des Werkstücks mittels elektromagnetischer Wellen. Dabei kann das Werkstück mittels der RFID-Technologie automatisch und berührungslos identifiziert werden. Ein an der Pressmaschine angeordneter RFID-Leser kann dabei eine Kennung auslesen, welche von einem entsprechenden RFID-Transponder des Werkstücks bereitgestellt sein kann. Diese Kennung kann dabei das Werkstück - zumindest seiner Art nach - identifizieren.

Die NFC-Technik oder auch Nahfeldkommunikation (englisch: near field communication) ist ein auf der RFID-Technik basierender internationaler Übertragungsstandard zum kontaktlosen Austausch von Daten per elektromagnetischer Induktion. Dabei können Datenübertragungsraten von maximal 424 kBit/s erreicht werden. Die Kommunikation zwischen den entsprechenden NFC-Teilnehmern kann dabei aktiv-passiv, oder auch aktiv-aktiv sein.

Die Bluetooth-Kommunikation ermöglicht die Datenübertragung zwischen Geräten über eine kurze Distanz per Funktechnik. Die Kommunikation erfolgt dabei mittels eines entsprechend entwickelten Industriestandards, beispielsweise gemäß der Norm IEEE 802.15.1.

Vorzugsweise ist das Sensorsystem eingerichtet zur Merkmalserkennung von charakteristischen Merkmalen des Werkstücks, insbesondere von charakteristischen geometrischen Merkmalen des Werkstücks. Beispielsweise kann mittels des Sensorsystems eine Form und/oder Größe des Werkstücks erkannt werden. Anhand dieser charakteristischen Merkmale kann das Werkstück zumindest seiner Art nach identifiziert werden, und anschließend der Motor dementsprechend angesteuert werden um das Werkstück optimal zu verformen. Mittels des Sensorsystems können in einer bevorzugten Ausgestaltung auch die Los- und/oder Seriennummer (als charakteristische Merkmale) des Werkstücks erkannt werden. Dadurch kann der Prozess des Verpressens nachverfolgbar gestaltet werden.

Das Sensorsystem ist von einem Element der Pressmaschine in einer ersten Konfiguration der Pressmaschine zumindest teilweise bedeckt und/oder geschützt und/oder geblockt, und wird in einer zweiten Konfiguration der Pressmaschine durch das Element freigegeben. Ein Sensor des Sensorsystems ist von einem Teil des Gehäuses der Pressmaschine bedeckt, wodurch der Sensor vor Verschmutzung oder sonstigen Umwelteinflüssen geschützt werden kann. Wenn die Pressbacken auseinander bewegt werden, bzw. geöffnet werden, was der zweiten Konfiguration entsprechen kann, wird der Sensor (zumindest teilweise) freigeben bzw. freigelegt. Nun kann mittels des Sensorsystems das Werkstück identifiziert werden. Beim anschließenden Verformen des Werkstücks werden die Pressbacken aufeinander zubewegt, bzw. in die erste Konfiguration gebracht, wodurch der Sensor erneut zumindest teilweise durch ein Teil des Gehäuses bedeckt werden kann. Hierdurch wird auch sichergestellt, dass die Identifikation mittels des Sensorsystems nur erfolgt, wenn ein Verformen des Werkstücks erfolgen soll. Es wird somit verhindert, dass versehentlich eine falsche Identifizierung eines Werkstücks erfolgt, welches sich in der Nähe befindet (z.B. auf einer Werkbank liegt). In einer bevorzugten Ausführungsform ist das Sensorsystem eingerichtet, um das Identifizieren des Werkstücks dann durchzuführen, wenn die Pressbacken auseinander bewegt werden, z.B. um das Werkstück zu greifen. Folglich kann das Sensorsystem aktiviert werden, wenn die Pressbacken entsprechend bewegt werden, um das Werkstück zur Verformung aufzunehmen. Auch hierdurch wird garantiert, dass die Identifikation des Werkstücks erst dann erfolgt, wenn dieses verformt werden soll. Die Aktivierung des Sensorsystems kann mechanisch erfolgen, etwa über einen Freigabemechanismus welcher mit einem Bolzen der Pressmaschine und einer entsprechenden Form an einer der Pressbacken in Kommunikation steht.

Vorzugsweise sind die Pressbacken frei vom Sensorsystem. Somit sind gemäß diesem Ausführungsbeispiel an den Pressbacken keine Elemente des Sensorsystems angeordnet. Das Sensorsystem kann somit beispielsweise ausschließlich an einem Handteil der Pressmaschine angeordnet sein. Dies ermöglicht eine einfache Austauschbarkeit der Pressbacken. In einer anderen bevorzugten Ausführungsform ist das Sensorsystem zumindest teilweise an den Pressbacken angeordnet, insbesondere in einer Vertiefung der Pressbacken (etwa zum Schutz des Sensorsystems). Dabei kann das Sensorsystem über eine Kopplungsschnittstelle mit dem Motor der Pressmaschine verbunden sein. Mittels des Sensorsystems kann generell überprüft werden, dass das richtige Fitting vorliegt. Das Verpressen kann dabei in einer Ausgestaltung nur dann freigegeben werden, wenn der richtige Fitting erkannt wurde.

Das Sensorsystem ist zumindest teilweise an einem Gehäuse der Pressmaschine angeordnet, zwischen den Backen der Pressbacken. Die Blickrichtung des Sensors ist dabei insbesondere in Längsrichtung entlang der Pressbacken ausgerichtet. Auch durch diese Anordnung kann das Sensorsystem vor Verschmutzung oder sonstigen Umwelteinflüssen geschützt werden, da es durch die Backen der Pressbacken zumindest teilweise abgeschirmt wird. Die Längsrichtung kann dabei einer Vorstoßrichtung der Pressmaschine entsprechen, und/oder eine Greifrichtung zum Greifen des Werkstücks mittels der Greifbacken repräsentieren. Die Backen der Pressbacken bedecken das Sensorsystem zumindest teilweise, wenn die Pressbacken geschlossen sind. Ferner können die Backen das Sensorsystem freigeben, wenn die Pressbacken auseinander gefahren sind zum Greifen des Werkstücks. Im geschlossenen System schirmen die Backen dabei das Sensorsystem zumindest teilweise ab, um es vor äußeren Einflüssen zu schützen. Vorzugsweise umfasst die Pressmaschine einen Protokollspeicher eingerichtet zum Speichern der Sensordaten und von Steuerungsdaten. Dadurch kann der Verformungsvorgang nachverfolgbar gestaltet werden. Alle oder einige Daten zum Verformungsvorgang können in dem Protokollspeicher abgespeichert werden, um auch eine Qualitätsüberwachung einzelner Verformungen zu ermöglichen. Auf den Protokollspeicher kann über eine (kabellose oder kabelgebundene) Schnittstelle zugegriffen werden, um die entsprechenden Daten auszulesen.

Vorzugsweise ist die Pressmaschine eingerichtet, um eine tatsächliche Presskurve mit einer erwarteten Presskurve zu vergleichen. Basierend auf dem Vergleich kann vorzugsweise der Fitting identifiziert werden. Die tatsächliche Presskurve kann sich dabei aus dem Druck im Arbeitszylinder über den Weg des Arbeitskolbens der Pressmaschine ergeben, während die erwartete Presskurve sich aus den Pressbacken ergibt, und den für die Pressbacken hinterlegten Fittings. Die vorliegende Erfindung betrifft weiterhin ein Verfahren zum Betreiben einer Pressmaschine gemäß den obigen Ausführungen, zum plastischen Verformen eines rohrförmigen Werkstücks, wie etwa eines Fittings. Das Verfahren umfasst dabei die folgenden Schritte: Identifizieren des Werkstücks mittels des Sensorsystems; Greifen des Werkstücks mittels der Pressbacken; und Erzeugen einer Kraft durch die Pressbacken auf die Oberfläche des gegriffenen Werkstücks basierend auf dem Identifizieren des Werkstücks. Zum Erzeugen der Kraft kann der Motor der Pressmaschine entsprechend angesteuert werden. Dabei kann abhängig vom Schritt des Identifizierens etwa eine reduzierte oder erhöhte Presskraft eingestellt werden, je nachdem was für ein Werkstück identifiziert wurde.

Gemäß der vorliegenden Erfindung kann das erfindungsgemäße Verfahren auch auf einem Computerprogramm gespeichert werden, welches ein entsprechendes System veranlassen kann, die jeweiligen Schritte durchzuführen.

Die vorliegende Erfindung betrifft ferner Pressbacken zum Koppeln an eine Pressmaschine zum plastischen Verformen eines rohrförmigen Werkstücks, insbesondere eines Fittings. Beispielsweise können diese Pressbacken an eine Pressmaschine gemäß den obigen Ausführungen gekoppelt werden. Die Pressbacken umfassen dabei ein Sensorsystem eingerichtet zum Identifizieren des rohrförmigen Werkstücks. Die Pressbacken können dabei austauschbar an die Pressmaschine gekoppelt werden. Die obigen Erläuterungen zu dem Sensorsystem gelten dabei analog auch hier.

Die vorliegende Erfindung betrifft ferner ein rohrförmiges Werkstück, insbesondere Fitting, welches eingerichtet ist zur plastischen Verformung durch eine Pressmaschine. Das rohrförmige Werkstück kann dabei beispielsweise durch eine Pressmaschine gemäß den obigen Ausführungen verformt werden. Das Werkstück, insbesondere Fitting, kann dabei gemäß den obigen Ausführungen ausgestaltet sein, und etwa aus Kupfer, Kunststoff, Komposit, und/oder (Edel-)Stahl bestehen. Das rohrförmige Werkstück umfasst dabei ein Mittel, welches eingerichtet ist zum Bereitstellen einer Kennung zur Identifikation des Werkstücks. Das Mittel kann dabei gemäß den obigen Ausführungen beispielsweise als Barcode oder QR-Code ausgestaltet sein. Insbesondere kann das Mittel einen Transponder umfassen, insbesondere RFID- oder NFC-Transponder, welcher zum Bereitstellen der Kennung eingerichtet ist.

### 4. Beschreibung bevorzugte Ausführungsbeispiele

Im Folgenden wird die vorliegende Erfindung unter Bezugnahme auf die beiliegenden Figuren näher beschrieben. Dabei sind gleiche Elemente mit gleichen Bezugszeichen versehen. Es zeigen:
Figur 1 eine Pressmaschine gemäß einer Ausführungsform der vorliegenden Erfindung;
Figur 2 eine Pressbackenanordnung mit Pressbacken gemäß einer Ausführungsform der vorliegenden Erfindung;
Figur 3 ein rohrförmiges Werkstück gemäß einer Ausführungsform der vorliegenden Erfindung; und
Figur 4 ein rohrförmiges Werkstück gemäß einer weiteren Ausführungsform der vorliegenden Erfindung.

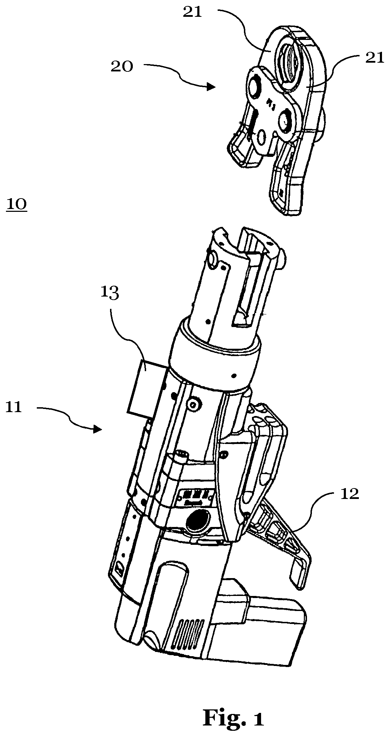

In der Figur 1 ist eine Pressmaschine 10 gemäß einer Ausführungsform der vorliegenden Erfindung gezeigt. Die Pressmaschine 10 umfasst dabei ein Handteil 11, welches von einem Bediener bzw. Nutzer handgeführt werden kann. An das Handteil 11 kann eine Pressbackenanordnung 20 lösbar gekoppelt werden. Die Pressbackenanordnung 20 umfasst zwei Pressbacken 21 mittels welchen ein Fitting gegriffen und plastisch verformt werden kann. Hierzu ist in dem Handteil 11 ein Motor (kann im Gehäuse angeordnet sein) bereitgestellt, welcher über eine Koppelschnittstelle die Pressbackenanordnung 20 antreiben und letztlich die Pressbacken 21 bewegen kann, um das Fitting zu verformen. Zum Verformen des Fittings kann ein Bediener einen entsprechenden Betätigungshebel 12 betätigen: Durch entsprechendes Betätigen des Hebels 12 werden die Pressbacken 21 auseinander gefahren, um ein Fitting zu greifen, und dann zusammengedrückt, um das Fitting zu Verformen.

An der Pressmaschine 10 ist ferner ein Sensorsystem 13 bereitgestellt, welches an dem Handteil 11 angeordnet ist. In diesem Ausführungsbeispiel ist das Sensorsystem 13 teilweise durch ein Bluetooth-Modul implementiert. Durch Betätigen des Hebels 12 zum auseinanderfahren der Pressbacken 21, um ein Fitting zu greifen, wird das Bluetooth-Modul 13 aktiviert. Dabei kann das Bluetooth-Modul 13 im aktivierten Zustand eine Kennung von einem entsprechenden an dem Fitting bereitgestellten Bluetooth-Modul erkennen. Anhand dieser Kennung kann mittels des Sensorsystems 13 das Fitting identifiziert werden. Ferner wird bei entsprechender Betätigung des Hebels 12 der Motor angetrieben, um eine Kraft auf das zwischen den Pressbacken 21 angeordnete Fitting auszuüben. Hierzu wird der Motor abhängig davon angesteuert, welches Werkstück bzw. welche Art von Fitting identifiziert wurde.

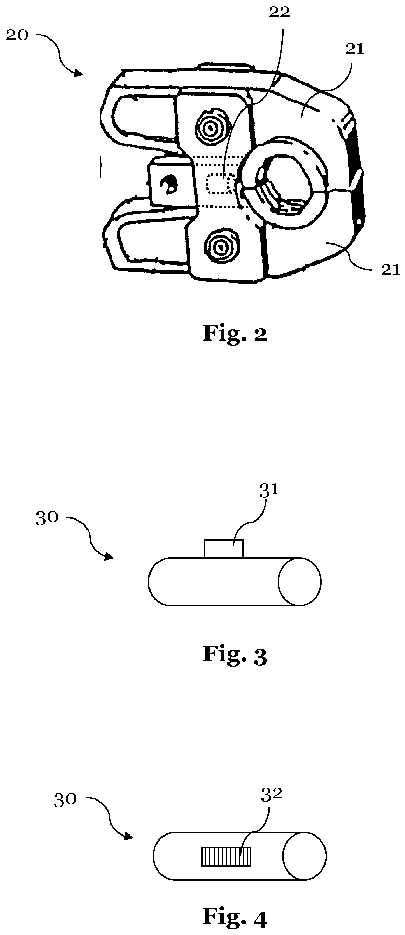

In der Figur 2 ist eine Pressbackenanordnung 20 mit Pressbacken 21 gemäß einer Ausführungsform der vorliegenden Erfindung gezeigt. Die Pressbackenanordnung kann lösbar an ein Handteil einer Pressmaschine gekoppelt werden. Zwischen den Pressbacken 21 ist ein Sensorsystem 22 angeordnet, welches im hier gezeigten geschlossenen Zustand der Pressbacken 21 durch diese verdeckt wird. Wenn die Pressbacken 21 auseinanderbewegt werden, um ein Fitting zu greifen, wird das Sensorsystem 22 zumindest teilweise freigelegt. In dem hiergezeigten Ausführungsbeispiel umfasst das Sensorsystem 22 eine optische Kamera. Wenn die Pressbacken 21 auseinander bewegt sind, kann die optische Kamera 22 durch die Pressbacken 21 hindurch das zugreifende Fitting erfassen, erkennen und letztlich identifizieren. Nach erfolgreichem Verformen des Fittings wird die optische Kamera 22 wieder durch die geschlossenen Pressbacken 21 verdeckt.

In den Figuren 3 und 4 sind zwei mögliche Ausgestaltungen von rohrförmigen Werkstücken gemäß weiterer Ausführungsformen der vorliegenden Erfindung gezeigt. Die gezeigten Werkstücke sind dabei in Form von Fittings 30 ausgestaltet. Die Fittings 30 umfassen dabei Mittel 31, 32 zum Bereitstellen einer Kennung zur Identifikation des jeweiligen Fittings 30, etwa an eine Pressmaschine 10 gemäß Figur 1, und/oder über eine Pressbackenanordnung 20 gemäß Figur 2.

Das in der Figur 3 gezeigt Fitting 30 umfasst ein Bluetooth-Modul 31, auf welchem eine Kennung hinterlegt ist. Die Kennung charakterisiert dabei das Fitting 30 zumindest seiner Art nach. Mittels eines entsprechenden Bluetooth-Moduls an einer Pressmaschine, wie etwa mittels dem hinsichtlich Figur 1 beschriebenen Bluetooth-Modul 13, kann die auf dem Bluetooth-Modul 31 des Fittings 31 hinterlegte Kennung ausgelesen werden, um das Fitting 30 zu identifizieren.

Bei dem in Figur 4 dargestellten Fitting 30 ist ein Barcode 32 auf dem Fitting 30 angeordnet. Der Barcode 32 charakterisiert dabei das Fitting 30 zumindest seiner Art nach. Dieser Barcode 32 kann beispielsweise mittels einer Kamera oder einem optischen Scanner, wie etwa mittels der hinsichtlich Figur 2 beschriebenen optischen Kamera 22, erkannt werden, um letztlich das Fitting 30 zu identifizieren.

Der Fachmann versteht, dass einzelne Elemente der oben genannten Ausführungsbeispiele miteinander kombiniert oder ausgetauscht werden können.

In einer bevorzugten Ausführungsform können die Pressbacken 21 beispielsweise für Stahlfittings ausgelegt sein. Wenn mittels des Sensorsystems ein Fitting als Kupferfitting identifiziert wird, kann ein Alarm oder eine Fehlermeldung ausgegeben werden. Alternativ oder zusätzlich kann die Presskraft entsprechend angepasst werden, um den Kupferfitting optimal mittels der für Stahlfittings ausgelegten Pressbacken zu verpressen. Der Fachmann versteht, dass dieses Prinzip nicht auf Stahl- und Kupferfittings beschränkt ist.

In einer weiteren bevorzugten Ausführungsform kann die Pressmaschine auch einen Alarm oder eine Fehlermeldung ausgeben, wenn eine tatsächlich vorliegende Presskurve von einer erwarteten Presskurve abweicht. Die tatsächliche Presskurve kann sich dabei aus dem Druck im Arbeitszylinder über den Weg des Arbeitskolbens ergeben, während die erwartete Presskurve sich aus der Kombination von Pressbacken und (hinsichtlich der verwendeten Pressbacken) zu erwartenden Fitting ergeben kann, und im Gerät hinterlegt sein kann. Aus einer solchen Abweichung kann auf den tatsächlich vorliegenden Fitting geschlossen werden, und die Presskraft entsprechend angepasst werden. Beispielsweise kann bei Verwendung einer 16er Pressbackenanordnung ein 15er Fitting verpresst werden, und dies aus dem Vergleich der Presskurven erkannt werden.

### Bezugszeichenliste:

- 10: Pressmaschine
- 11: Handteil
- 12: Sensorsystem mit Bluetooth-Modul
- 13: Betätigungshebel der Pressmaschine
- 20: Pressbackenanordnung
- 21: Pressbacken
- 22: Sensorsystem mit optischer Kamera
- 30: Fitting
- 31: Bluetooth-Modul am Fitting
- 32: Barcode am Fitting

## Patentansprüche

1. Pressmaschine (10), zum plastischen Verformen eines rohrförmigen Werkstücks (30), insbesondere eines Fittings, die Pressmaschine aufweisend:
Pressbacken (21);
einen Motor, eingerichtet zum Antreiben der Pressbacken (21) um eine Kraft auf das Werkstück (30) aufzubringen;
ein Sensorsystem (12, 22), eingerichtet zum Identifizieren des Werkstücks (30), wobei das Sensorsystem (12, 22) zumindest teilweise an einem Gehäuse der Pressmaschine (10) zwischen den Pressbacken (21) angeordnet ist; und
eine Steuerung, die eingerichtet ist, anhand der Sensordaten den Motor zu steuern,
wobei die Blickrichtung des Sensorsystem (12, 22) entlang der Pressbacken (21) ausgerichtet ist,
**dadurch gekennzeichnet, dass**
die Pressbacken (21) das Sensorsystem zumindest teilweise bedecken, wenn die Pressbacken (21) geschlossen sind, und wobei die Pressbacken (21) das Sensorsystem (12, 22) freigeben, wenn die Pressbacken (21) auseinandergefahren sind zum Greifen des Werkstücks (30).

2. Pressmaschine (10) nach Anspruch 1, aufweisend ein Speichermedium mit einer Datenbank mit, für eine Mehrzahl von Werkstücken (30), Steuerparameter zum Steuern der Pressmaschine (10) für jedes der Mehrzahl von Werkstücken (30).

3. Pressmaschine (10) nach Anspruch 2, wobei die Steuerparameter Pressparameter umfassen, welche insbesondere eine maximale Presskraft, eine Pressgeschwindigkeit, ein Pressweg und/oder eine Pressdauer umfassen, und/oder wobei die Steuerparameter Motorparameter umfassen, welche insbesondere eine Motordrehzahl, Motorleistung und/oder einen Öldruck umfassen.

4. Pressmaschine (10) nach einem der Ansprüche 1-3, wobei das Sensorsystem (12, 22) eingerichtet ist zum Identifizieren des Werkstücks (30) über eine Distanz von 0 m bis 5 m, vorzugsweise zwischen 0,001 m und 4 m, weiter vorzugsweise zwischen 0,002 m und 3 m, weiter vorzugsweise zwischen 0,005 m und 2 m, weiter vorzugsweise zwischen 0,01 und 1 m, weiter vorzugsweise zwischen 0,05 und 0,5 m.

5. Pressmaschine (10) nach einem der Ansprüche 1-4, wobei das Sensorsystem (12, 22) eine Kamera, einen optischen Scanner, einen RFID-Leser, einen NFC-Leser und/oder ein Bluetooth-Modul umfasst.

6. Pressmaschine (10) nach einem der Ansprüche 1-5, wobei das Sensorsystem (12, 22) eingerichtet ist zum Erkennen eines Barcodes auf dem Werkstück (30), eines QR-Codes auf dem Werkstück (30), einer Kennung in einem RFID-Transponder an dem Werkstück (30), einer Kennung in einem NFC-Transponder an dem Werkstück (30), und/oder einer Kennung in einem Bluetooth-Modul an dem Werkstück (30).

7. Pressmaschine (10) nach einem der Ansprüche 1-6, wobei das Sensorsystem (12, 22) eingerichtet ist zur Merkmalserkennung von charakteristischen Merkmalen des Werkstücks (30), insbesondere von charakteristischen geometrischen Merkmalen des Werkstücks (30).

8. Pressmaschine (10) nach einem der Ansprüche 1-7, wobei das Sensorsystem (12, 22) von einem Element der Pressmaschine (10) in einer ersten Konfiguration der Pressmaschine (10) zumindest teilweise bedeckt und/oder geschützt und/oder geblockt wird, und in einer zweiten Konfiguration der Pressmaschine (10) das Element das Sensorsystem (12, 22) zumindest teilweise freigibt.

9. Pressmaschine (10) nach einem der Ansprüche 1-8, wobei das Sensorsystem (12, 22) eingerichtet ist, das Identifizieren des Werkstücks (30) durchzuführen, wenn die Pressbacken (21) auseinander bewegt sind.

10. Pressmaschine (10) nach einem der Ansprüche 1-9, wobei die Pressbacken (21) frei sind vom Sensorsystem (12, 22), oder wobei das Sensorsystem (12, 22) zumindest teilweise an den Pressbacken (21) angeordnet ist, insbesondere in einer Vertiefung der Pressbacken (21).

11. Pressmaschine (10) nach einem der Ansprüche 1-10, ferner aufweisend einen Protokollspeicher eingerichtet zum Speichern der Sensordaten und von Steuerungsdaten.

12. Verfahren zum Betreiben einer Pressmaschine (10) gemäß einem der Ansprüche 1-11 zum plastischen Verformen eines rohrförmigen Werkstücks (30), das Verfahren aufweisend:
Identifizieren des Werkstücks (30) mittels des Sensorsystems (12, 22);
Greifen des Werkstücks (30) mittels der Pressbacken (21); und
Erzeugen einer Kraft mittels der Pressbacken (21) auf die Oberfläche des gegriffenen Werkstücks (30) basierend auf dem Identifizieren des Werkstücks (21).

## Claims

1. Pressing machine (10) for plastically deforming a tubular workpiece (30), in particular a fitting, the pressing machine comprising:
press jaws (21);
a motor arranged to drive the press jaws (21) in order to apply a force to the workpiece (30);
a sensor system (12, 22) arranged to identify the workpiece (30), wherein the sensor system (12, 22) is arranged at least partially on a housing of the pressing machine (10) between the press jaws (21); and
a controller configured to control the motor based on the sensor data,
wherein the viewing direction of the sensor system (12, 22) is aligned along the press jaws (21), **characterized in that**
the press jaws (21) at least partially cover the sensor system when the press jaws (21) are closed, and wherein the press jaws (21) expose the sensor system (12, 22) when the press jaws (21) are moved apart to grip the workpiece (30).

2. Pressing machine (10) according to claim 1, comprising a storage medium with a database containing control parameters for a plurality of workpieces (30) for controlling the pressing machine (10) for each of the plurality of workpieces (30).

3. Pressing machine (10) according to claim 2, wherein the control parameters comprise pressing parameters, which in particular comprise a maximum pressing force, a pressing speed, a pressing stroke, and/or a pressing duration, and/or wherein the control parameters comprise motor parameters, which in particular comprise a motor speed, a motor power, and/or an oil pressure.

4. Pressing machine (10) according to one of claims 1-3, wherein the sensor system (12, 22) is designed to identify the workpiece (30) over a distance of 0 m to 5 m, preferably between 0.001 m and 4 m, more preferably between 0.002 m and 3 m, more preferably between 0.005 m and 2 m, more preferably between 0.01 and 1 m, more preferably between 0.05 and 0.5 m.

5. Pressing machine (10) according to one of claims 1-4, wherein the sensor system (12, 22) comprises a camera, an optical scanner, an RFID reader, an NFC reader, and/or a Bluetooth module.

6. Pressing machine (10) according to one of claims 1-5, wherein the sensor system (12, 22) is set up to recognize a barcode on the workpiece (30), a QR code on the workpiece (30), an identifier in an RFID transponder on the workpiece (30), an identifier in an NFC transponder on the workpiece (30), and/or an identifier in a Bluetooth module on the workpiece (30).

7. Pressing machine (10) according to one of claims 1-6, wherein the sensor system (12, 22) is designed for feature recognition of characteristic features of the workpiece (30), in particular characteristic geometric features of the workpiece (30).

8. Pressing machine (10) according to one of claims 1-7, wherein the sensor system (12, 22) is at least partially covered and/or protected and/or blocked by an element of the pressing machine (10) in a first configuration of the pressing machine (10), and in a second configuration of the pressing machine (10), the element at least partially exposes the sensor system (12, 22).

9. Pressing machine (10) according to one of claims 1-8, wherein the sensor system (12, 22) is arranged to perform the identification of the workpiece (30) when the press jaws (21) are moved apart.

10. Pressing machine (10) according to one of claims 1-9, wherein the pressing jaws (21) are free of the sensor system (12, 22), or wherein the sensor system (12, 22) is at least partially arranged on the pressing jaws (21), in particular in a recess of the pressing jaws (21).

11. Pressing machine (10) according to one of claims 1-10, further comprising a log memory designed to store the sensor data and control data.

12. Method for operating a pressing machine (10) according to one of claims 1-11 for plastically deforming a tubular workpiece (30), the method comprising:
identifying the workpiece (30) by means of the sensor system (12, 22);
gripping the workpiece (30) by means of the press jaws (21); and
generating a force by means of the press jaws (21) onto the surface of the gripped workpiece (30) based on the identification of the workpiece (21).

## Revendications

1. Machine à presser (10), pour la déformation plastique d'une pièce (30) tubulaire, en particulier d'un raccord, la machine à presser comportant :
des mâchoires de pressage (21) ;
un moteur, configuré pour entraîner les mâchoires de pressage (21) afin d'appliquer une force sur la pièce (30) ;
un système de capteur (12, 22), configuré pour identifier la pièce (30), dans laquelle le système de capteur (12, 22) est disposé au moins partiellement sur un boîtier de la machine à presser (10) entre les mâchoires de pressage (21) ; et
une commande, qui est configurée pour commander le moteur selon les données de capteur,
dans laquelle la direction de visée du système de capteur (12, 22) est orientée le long des mâchoires de pressage (21),
**caractérisée en ce que** les mâchoires de pressage (21) recouvrent au moins partiellement le système de capteur lorsque les mâchoires de pressage (21) sont fermées, et
dans laquelle les mâchoires de pressage (21) libèrent le système de capteur (12, 22) lorsque les mâchoires de pressage (21) sont écartées pour saisir la pièce (30).

2. Machine à presser (10) selon la revendication 1, comportant un support de stockage avec une base de données avec, pour une pluralité de pièces (30), des paramètres de commande pour commander la machine à presser (10) pour chacune de la pluralité de pièces (30).

3. Machine à presser (10) selon la revendication 2, dans laquelle les paramètres de commande comprennent des paramètres de pressage, lesquels comprennent en particulier une force de pressage maximale, une vitesse de pressage, un déplacement de pressage et/ou une durée de pressage, et/ou dans laquelle les paramètres de commande comprennent des paramètres moteur, lesquels comprennent en particulier un régime moteur, une puissance moteur et/ou une pression d'huile.

4. Machine à presser (10) selon l'une des revendications 1 à 3, dans laquelle le système de capteur (12, 22) est configuré pour identifier la pièce (30) sur une distance de 0 m à 5 m, de préférence entre 0,001 m et 4 m, plus préférablement entre 0,002 m et 3 m, plus préférablement entre 0,005 m et 2 m, plus préférablement entre 0,01 m et 1 m, plus préférablement entre 0,05 m et 0,5 m.

5. Machine à presser (10) selon l'une des revendications 1 à 4, dans laquelle le système de capteur (12, 22) comprend une caméra, un scanner optique, un lecteur RFID, un lecteur NFC et/ou un module Bluetooth.

6. Machine à presser (10) selon l'une des revendications 1 à 5, dans laquelle le système de capteur (12, 22) est configuré pour détecter un code-barres sur la pièce (30), un code QR sur la pièce (30), un identifiant dans un transpondeur RFID sur la pièce (30), un identifiant dans un transpondeur NFC sur la pièce (30), et/ou un identifiant dans un module Bluetooth sur la pièce (30).

7. Machine à presser (10) selon l'une des revendications 1 à 6, dans laquelle le système de capteur (12, 22) est configuré pour détecter des caractéristiques distinctives de la pièce (30), en particulier des caractéristiques géométriques distinctives de la pièce (30).

8. Machine à presser (10) selon l'une des revendications 1 à 7, dans laquelle le système de capteur (12, 22) est au moins partiellement recouvert et/ou protégé et/ou bloqué par un élément de la machine à presser (10) dans une première configuration de la machine à presser (10), et dans une seconde configuration de la machine à presser (10) l'élément libère au moins partiellement le système de capteur (12, 22).

9. Machine à presser (10) selon l'une des revendications 1 à 8, dans laquelle le système de capteur (12, 22) est configuré pour effectuer l'identification de la pièce (30) lorsque les mâchoires de pressage (21) sont écartées.

10. Machine à presser (10) selon l'une des revendications 1 à 9, dans laquelle les mâchoires de pressage (21) sont indépendantes du système de capteur (12, 22), ou dans laquelle le système de capteur (12, 22) est disposé au moins partiellement sur les mâchoires de pressage (21), en particulier dans un renfoncement des mâchoires de pressage (21).

11. Machine à presser (10) selon l'une des revendications 1 à 10, comportant en outre une mémoire de protocole configurée pour stocker les données de capteur et les données de commande.

12. Procédé de mise en œuvre d'une machine à presser (10) selon l'une des revendications 1 à 11 pour la déformation plastique d'une pièce (30) tubulaire, le procédé comportant :
l'identification de la pièce (30) au moyen du système de capteur (12, 22) ;
la préhension de la pièce (30) au moyen des mâchoires de pressage (21) ; et
la génération d'une force au moyen des mâchoires de pressage (21) sur la surface de la pièce (30) saisie sur la base de l'identification de la pièce (21).
